Europäisches Patentamt

**European Patent Office**

**Office européen des brevets**

(11) Veröffentlichungsnummer: **0 124 772**
**A2**

(12) # EUROPÄISCHE PATENTANMELDUNG

(21) Anmeldenummer: 84103741.9

(22) Anmeldetag: 05.04.84

(51) Int. Cl.³: **B 65 D 5/42**
**B 32 B 27/10**

(30) Priorität: 04.05.83 DE 3316238

(43) Veröffentlichungstag der Anmeldung:
14.11.84 Patentblatt 84/46

(84) Benannte Vertragsstaaten:
FR GB NL

(71) Anmelder: PKL PAPIER-UND KUNSTSTOFFWERKE
LINNICH GESELLSCHAFT MIT BESCHRÄNKTER
HAFTUNG
Heerdter Sandberg 32
D-4000 Düsseldorf(DE)

(72) Erfinder: Friedrich, Peter, Dr.
Franzosen Weg 34
D-5172 Körrenzig(DE)

(72) Erfinder: Schadowski, Werner, Dipl.-Ing.
Welzer Strasse 10
D-5172 Linnich(DE)

(74) Vertreter: Pfeiffer, Helmut
Jagenberg AG Patentwesen Himmelgeister Strasse 107
Postfach 1123
D-4000 Düsseldorf 1(DE)

(54) Kartonbahn bzw. -zuschnitt für eine licht-, luft- und flüssigkeitsdichte, heisssiegelbare Faltschachtel, insbesondere Aseptik-Flüssigkeitsverpackung.

(57) Bei einer kunststoffbeschichteten Kartonbahn bzw.
-zuschnitt für eine licht-, luft- und flüssigkeitsdichte,
heißsiegelbare Faltschachtel, insbesondere Aseptik-
Flüssigkeitsverpackung ist als licht- und sauerstoffdichte Folie
eine aluminium-bedampfte, orientierte Kunststoff-Folie (5),
vorzugsweise aus Polyester, Polypropylen oder Polyamid
vorgesehen. Durch Verwendung der aluminium-bedampften
Kunststoff-Folie (5) läßt sich die innere, dem Füllgut
zugewandte Kunststoffbeschichtung (4), z.B. aus Polyäthylen,
erheblich dünner ausführen. Dennoch ergeben sich eine gute
Nahtfestigkeit und -dichtigkeit, vor allem jedoch eine bemerkenswerte Reduzierung des Sauerstoff-Durchgangs durch die
Naht, so daß die Lebensdauer des Füllgutes merklich erhöht
werden kann.

FIG.1

EP 0 124 772 A2

Croydon Printing Company Ltd

PKL Papier- und Kunststoff-Werke Linnich GmbH, Düsseldorf

Düsseldorf, den 29.o4.1983
83.L.o1

Kartonbahn bzw.-zuschnitt für eine licht-, luft- und flüssigkeitsdichte, heißsiegelbare Faltschachtel, insbesonde Aseptik-
Flüssigkeitsverpackung.

Die Erfindung bezieht sich auf eine Kartonbahn bzw. einen -zuschnitt für eine licht-, luft- und flüssigkeitsdichte, heißsiegelbare Faltschachtel, insbesondere Aseptik-Flüssigkeitsverpackung,
mit jeweils einer Kunststoff-, z.B. Polyäthylenbeschichtung auf
beiden Seiten des Kartons und auf der dem Füllgut der Faltschachtel
zugewandten Innenseite einer licht- und sauerstoffdichten Folie.

Voraussetzung für eine Aseptik-Flüssigkeitsverpackung aus einem
kunststoffbeschichteten Kartonzuschnitt bzw. einer Kartonbahn ist,
daß die Verpackung im geformten und gefüllten Zustand völlig
flüssigkeitsdicht ist. Jede Pore der Innenbeschichtung bringt die
Gefahr mit sich, daß die Flüssigkeit mit der Zeit in dem nicht
völlig keimfreien Karton eindringt, so daß eine Kontamination ausgelöst wird.

Zahlreiche Füllgüter, wie z.B. Milch, behalten unter aseptischen
Bedingungen ihre Qualität nur bei, wenn sie gegen Licht und Sauerstoff ausreichend geschützt sind. Ein Material für die Verpackung,
das diesen Anforderungen weithin genügt und das deshalb bevorzugt
für das aseptische Verpacken von Milch  eingesetzt wird, besteht
aus einem Verbund von polyäthylenbeschichtetem Karton mit einer
Aluminiumfolie. Der Karton ist dabei der Träger der Steifigkeit
und Festigkeit für die Faltschachtel, während die Aluminiumfolie
Schutz gegen Licht und Sauerstoff gibt und die Innen-Polyäthylenschicht einerseits für die Flüssigkeitsdichtigkeit und andererseits
dafür sorgt, daß durch Heißsiegelung dichte Nähte gebildet werden
können.

Solche Verpackungen haben sich in der Prxis für die Aufnahme von
verderblichen Gütern, wie insbesondere H-Milch und Fruchtsäfte,
durchaus bewährt.

Bei höherer Beanspruchung bzw. bei schärferer Prüfung ist aber nicht auszuschließen, daß solche Verpackungen in geringem Umfang Undichtigkeiten zeigen, die sich teils auf die Qualität des Füllgutes, teils auf die Sterilitätsrate ungünstig auswirken können. Zur Erzielung einer hohen Nahtdichte ist man daher gezwungen, eine relativ dicke innere Polyäthylenschicht zu verwenden, um die mechanische Festigkeit der Naht und auch die nötige Dichtigkeit zu erzielen. Bei dem bisher üblichen Aufbau einer Kartonbahn bzw. einem Zuschnitt mit einer Aluminiumfolie weist die auf der Innenseite der Aluminiumfolie aufgebrachte Polyäthylenschicht eine Dicke von etwa 4o-6o $\mu$ auf. Insbesondere ist diese Dicke deshalb notwendig, um die Stufen an den Nähten, z.B. an der Kreuzung zwischen Längs- und Quernaht, sicher zu überbrücken und abzudichten. Bei der Siegelung der Kopfnaht einer Faltschachtel müssen z.B. Stufen überbrückt werden, nämlich da, wo ein Wechsel der Lagenzahl stattfindet. Den Siegeldruck kann man nicht beliebig erhöhen, weil sonst an der Naht das heiße Polyäthylen abgequetscht wird.

Eine vergleichsweise dicke innere Polyäthylenschicht erschwert in nicht unerheblichem Maße das Einbringen von Nutlinien in die Verpackungsbahn bzw. den Zuschnitt, die notwendig sind, um das Ausformen der Faltschachtel zu erleichtern. Die Qualität der Nutlinien wird umso schlechter, je dicker die innere Polyäthylenschicht ist, da diese als elastischer Puffer die Wirkung der Nutwerkzeuge auf den Karton abschwächt. Mit anderen Worten heißt dies, eine nachteilige Einwirkung auf die Nutlinien ergibt sich, wenn der Kunststoffanteil im Vergliech zum Karton ein gewisses Dicken-Verhältnis überschreitet. Andererseits kann aber bei Flüssigkeitspackungen der Druck beim Nuten nicht beliebig erhöht werden, weil die innere Polyäthylenschicht auf keinen Fall verletzt werden darf. Um eine Beeinträchtigung des Nutvorgangs weitgehend zu vermeiden, ist man der besseren Nutbarkeit wegen angewiesen, dickeren Karton zu verwenden, als dies von der Standfestigkeit der Packung her, wie insbesondere z.B. bei kleinen Packungen notwendig wäre.

Die Verwendung einer vergleichsweise dicken inneren Polyäthylenschicht ist aber auch noch insofern nachteilig, als hierdurch die Sauerstoffdichtigkeit beeinträchtigt wird. Selbst wenn die Nähte porenfrei gesiegelt sind, findet, da Polyäthylen nicht sauerstoffdicht ist, ein gewisser Sauerstoffaustausch zwischen dem Füllgut und der umgebenden Luft statt, und zwar durch die .olyäthylenschicht innerhalb der Siegelnaht hindurch. Die diffundierende Menge ist umso größer, je größer der Nahtquerschnitt ist und umso kleiner, je länger der Diffusionsweg ist. Bei einer vergleichsweise großen Schichtdicke der Polyäthylenschicht ergibt sich insofern eine vergleichsweise hohe Sauerstoff-Diffusion, die sich auf das Füllgut auswirkt und somit dessen Lebensdauer merklich erniedrigt. Als weiteren Nachteil der bisher verwendeten Kartonbahn bzw- zuschnitt kommt hinzu, daß bei Verwendung der Aluminiumfolie als sauerstoff- und lichtdichte Folie beim sog. Abschälen der Bahn bzw. Zuschnittkante, bei der man durch Abfräsen oder Abschälen der äußeren Polyäthylenschicht und eines Teils der Kartonschicht und anschließendes Umschlagen der Nahtkante bei der Längsnahtbildung eine Siegelung und damit eine dichte Naht erzielt, die Schwierigkeit besteht, daß es, je dünner der Karton, desto schwieriger wird, das Schälen so durchzuführen, daß die Aluminiumfolie unverletzt bleibt und daß nicht durch örtliche Dünnstellen beim Umklappen der Nahtkante kleine Risse entstehen.

Der Erfindung liegt die Aufgabe zugrunde, eine Kartonbahn bzw. einen Zuschnitt zu schaffen, mittels der sich Faltschachteln für Aseptik-Abfüllungen mit guter Lichtdichtigkeit und Steifigkeit und verbesserter Sauerstoffdichtigkeit und sehr guter mechanischer Stabilität, insbesondere der Nähte, Ecken und Knickstellen der Faltschachteln herstellen lassen.

Diese Aufgabe wird erfindungsgemäß dadurch gelöst, daß die licht- und sauerstoffdichte Folie von einer mit Aluminium bedampften, orientierten Kunststoff-Folie, vorzugsweise einer Polyester-, Polypropylen- oder Polyamidfolie gebildet ist. Es hat sich gezeigt, daß bei Verwendung einer solchen mit Aluminium bedampften Kunststoff- Folie, die im Vergleich zu einer im Beschichtungsextruder aufgebrachten Polyäthylenschicht zäher bzw. mechanisch fester und weniger knickempfindlich ist, die innere Polyäthylenschicht erheblich verringert werden kann, ohne daß weder die Nahtfestigkeit und Nahtdichtigkeit noch der Nutvorgang beeinträchtigt werden. Die orientierte Kunststoff- folie stört den Nutvorgang in keiner Weise und man benötigt auf der Innenseite eine relativ dünne Polyäthylenschicht mit etwa 2o-3o g/m2, so daß man unter Berücksichtigung des Dicken-Verhältnisses zwischen Polyäthylenschicht und Karton auch einen Verbund mit vergleichs· weise dünnem Karton (18o g/m2 und darunter) verwenden kann, der sich nicht nur gut verarbeiten läßt, sondern auch dichte Nähte ermöglicht.

Die Reduzierung der Dicke der inneren Polyäthylenschicht bringt
in Bezug auf die Sauerstoffdichtigkeit einen erheblichen Vorteil,
denn durch die Verringerung der Schichtdicke von z.B. 60 $\mu$ , was
durchaus bei bisher bekannten Packungen notwendig war, auf etwa
30 $\mu$ , halbiert sich auch der Sauerstoffdurchgang. Dadurch verringert sich auch die Einwirkung des Sauerstoffs auf das Füllgut,
so daß dessen Lebensdauer merklich erhöht werden kann.

In zweckmäßiger Ausgestaltung der Erfindung ist die Aluminiumbedampfung auf der dem Füllgut der Faltschachtel zugewandten Seite
der Kunststoff-Folie aufgebracht. Das Aufbringen der Aluminiumbedampfung auf die dem Füllgut zugewandten Seite der Kunststoff-Folie
ist nicht nur für die Diffusionsdichtigkeit der Naht wichtig,
sondern auch in Bezug auf das Abschälen bzw. Abfräsen der Packungskante. Es hat sich nämlich überraschend gezeigt, daß trotz der an
sich vorhandenen Zähigkeit der Kunststoff-Folie aufgrund einer nur
geringen Rückstellneigung  das Umschlagen der abgefrästen dünnen
Kante relativ leicht durchgeführt werden kann. Dies ist bei der
Fertigung von Packungsmänteln mit durch das Umschlagen geschützter
Längsnaht von entscheidender Bedeutung, da dieser Arbeitsgang Laufgeschwindigkeiten bis über 500 m/min erfordert und vom zuverlässigen
Umschlagen der Kante die Dichtigkeit der späteren Verpackung abhängt.

Überrachenderweise wurde festgestellt, daß sich Faltschachteln aus
dem vorgeschlagenen Verbundmaterial aus polyäthylenbeschichtetem
Karton und aluminiumbedampfter Kunststoff-Folie relativ gut öffnen
lassen, z.B. durch Abreißen der Ohren bei sog. Ohrenpackungen. Diese
Erkenntnis steht im Gegensatz zu Beobachtungen, die mit Materialien
gemacht worden sind, bei denen die innere Polyäthylenschicht durch
Unterlegen einer im Extruder (z.B. durch Coxtrusion) aufgebrachten
Schicht aus zäherem Kunststoff (z.B. Jonomer) verstärkt war. Die
zähere Kunststoffschicht bringt zwar eine Verbesserung der Knickbeständigkeit, andererseits wird aber das Öffnen durch Abreißen der
Ohren deutlich erschwert. Bei dem erfindungsgemäßen Material lassen
sich die Packungen trotz guter Festigkeit und Knickbeständigkeit
**von Hand leicht öffnen, was offensichtlich auf das Zusammenspiel
im Spannungs-Dehungsverhalten der beteiligten Komponenten** zurückzu
**ren ist.Es kann zweckmäßig sein, die in üblicherweise** vorhandenen
Schwächungslinien bzw. Perforationen anzubringen. Unter Umständen
ist auch das Anbringen eines Einschnitts oder einer Kerbe, z.B. an
der Kopfnaht der fertigen Verpackung, von nutzer

Ein bevorzugtes Ausführungsbeispiel der Erfindung ist in der Zeichnung dargestellt und wird im folgenden näher erläutert. Es zeigen

Fig. 1: den Aufbau eines Kartonzuschnittes im Querschnitt,
Fig. 2: eine abgeschälte bzw. abgefräste Kante eines Kartonzuschnitts,
Fig. 3: eine Längsnaht bei einer Faltschachtel und
Fig. 4: eine Kopfnaht bei einer Faltschachtel.

Der Kartonzuschnitt besteht aus einem Kartonmaterial 1 mit einer auf seiner Außenseite aufgebrachten Polyäthylenschicht 2. Auf der Innenseite des Kartonmaterials befindet sich eine weitere Polyäthylenschicht 3 und zwischen dieser und einer inneren, dem Füllgut der im einzelnen nicht dargestellten Faltschachtel zugewandten Polyäthylenschicht 4 eine mit Aluminiumbedampfung versehene orientierte Kunststoff-Folie 5; z.B. aus Polyester, Polypropylen oder Polyamid. Die Aluminiumbedampfung ist auf der dem Füllgut zugewandten Seite der Kunststoff-Folie 5 aufgebracht. Die Schichtdicke der inneren Polyäthylenschicht 4 beträgt etwa 30 $\mu$ , die Dicke der äußeren Polyäthylenschicht 2 etwa 15 $\mu$ . Bei der Polyesterfolie handelt es sich vorzugsweise um eine dünne, biaxial orientierte Folie mit z.B. 12 $\mu$ Dicke.

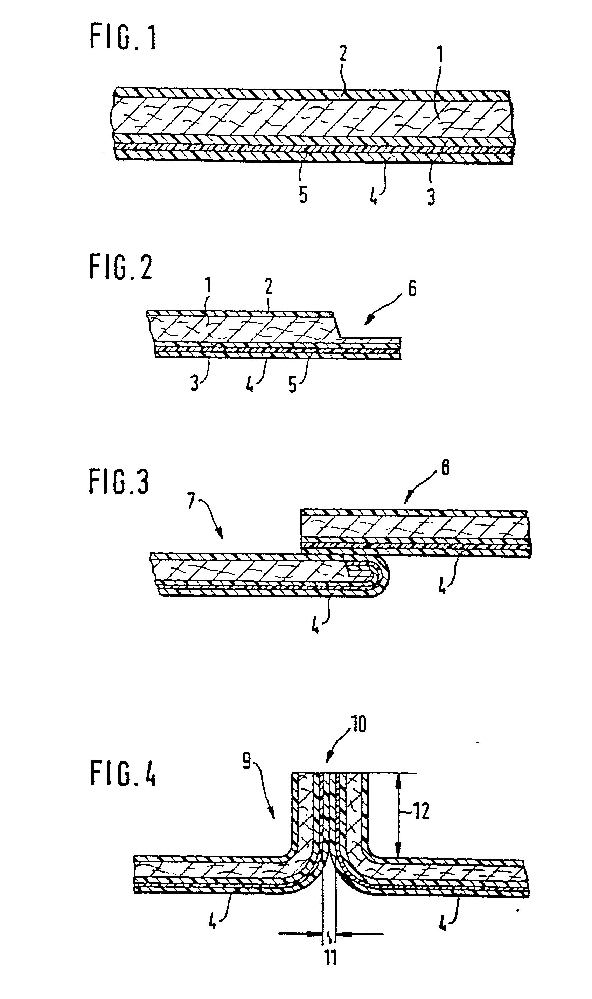

In Fig. 2 ist eine sog. abgeschälte bzw. abgefräste Kante 6 des Kartonzuschnitts dargestellt. Hierbei ist ein Teil der äußeren Polyäthylenschicht 2 und des Kartonmaterials 1 abgefräst bzw. abgeschält, so daß, wie in Figur 3 gezeigt, die Möglichkeit besteht, die innere Polyäthylenschicht 4 zusammen mit der Polyäthylenschicht 3 und der Kunststoff-Folie 5 umzuschlagen, so daß z.B. an einer Längsnaht der Faltschachtel eine geschützte Kante entsteht. Auf diese Weise läßt sich eine dichte und mechanisch feste Naht erzeugen, indem das eine Ende 7 des Kartonzuschnitts mit dem anderen Ende 8 über die jeweils innere Polyäthylenschicht 4, beispielsweise durch Heißsiegelung, miteinander verbunden wird.

In Fig. 4 ist eine sog. Kopfnaht dargestellt, bei der z.B. im oberen Bereich einer Faltschachtel die beiden Enden der Packungszuschnitte vertikal hochgebogen sind. Die Dicke der aus den beiden inneren Polyäthylenschichten 4 bestehenden Siegelnaht ist mit 11 angegeben und deren Höhe mit 12. Diese Darstellung zeigt deutlich, daß eine Sauerstoffdiffusion durch die Siegelnaht 10 hindurch sehr gering ist, da die die Siegelnaht bewirkende Polyäthylenschichten 4 in ihrer Dicke relativ gering gehalten sind und der Diffusionsweg 12 vergleichsweise groß ist.

0124772

Die Verwendung des erfindungsgemäßen Verbundmaterials in Gestalt einer polyäthylenbeschichteten Kartonbahn und einer aluminiumbedampften orientierten Kunststoff-Folie ist für Milch und Fruchtsäfte geeignet, insbesondere aber bei sehr empfindlichen Füllgütern, wie z.B. Suppen, fleischhaltigen Produkten u.dgl., da es gerade bei diesen auf höchste Dichtigkeit und eine minimale Unsterilitätsrate ankommt.

Patentansprüche

1.
Kartonbahn bzw. -zuschnitt für eine licht-, luft- und flüssigkeitsdichte, heißsiegelbare Faltschachtel, insbesondere Aseptik-Flüssigkeitsverpackung, mit jeweils einer Kunststoff-, z.B. Polyäthylenbeschichtung auf beiden Seiten des Kartons und auf der dem Füllgut der
Faltschachtel zugewandten Innenseite einer licht- und sauerstoffdichten Folie, dadurch gekennzeichnet, daß die licht- und sauerstoffdichte Folie von einer aluminiumbedampften, orientierten Kunststoff-
folie (5), vorzugsweise einer Polyester-, Polypropylen- oder Polyamidfolie gebildet ist.

2.
Kartonbahn bzw.-zuschnitt nach Anspruch 1, dadurch gekennzeichnet,
daß die Aluminiumbedampfung auf der dem Füllgut der Faltschachtel
zugewandten Seite der Kunststoff-Folie (5) aufgebracht ist.

3.
Kartonbahn bzw. -zuschnitt nach Anspruch 1 oder 2, dadurch gekennzeichnet, daß die Kunststoff-Folie (5) als dünne, biaxial orientierte
Folie ausgebildet ist.

4.
Kartonbahn bzw.-zuschnitt nach einem oder mehreren der Ansprüche
1 bis 3, dadurch gekennzeichnet, daß die Kunststoff-Folie (5) eine
Dicke von etwa 1o bis 20 $\mu$ aufweist.

5.
Kartonbahn bzw. -zuschnitt nach einem oder mehreren der Ansprüche
1 bis 4, zur Herstellung einer Flüssigkeitsverpackung, dadurch gekennzeichnet, daß die Kartonbahn- bzw. -zuschnitt eine gefräste bzw.
geschälte und umgelegte bzw. umgefaltete Kante (6) aufweist.

1/1

**FIG.1**

**FIG.2**

**FIG.3**

**FIG.4**